# DEMANDE DE BREVET EUROPEEN

(11) **EP 2 058 767 A2**
(43) Date de publication de la demande: **13.05.2009**
(21) Numéro de dépôt: 08167504.3
(22) Date de dépôt: 24.10.2008
(51) Int. Cl.: G06T 17/40

(54) **Procédé de génération d'objets-test numériques**

(30) Priorité: 26.10.2007 FR 0758612
(71) Demandeur: Qualiformed Sarl, 85025 La Roche sur Yon (FR); UNIVERSITE DE NANTES, 44035 Nantes Cedex 01 (FR)
(72) Inventeur: Denis, Eloïse, 44000 Nantes (FR); Beaumont, Stéphane, 85430 Nieul le Dolent (FR); Guedon, Jean-Pierre, 44700 Orvault (FR); Normand, Nicolas, 44360 Vigneux-de-Bretagne (FR)
(74) Mandataire: Chaillot, Geneviève

(57) **Abrégé**

La présente invention a pour objet un procédé de génération d'images numériques (objets-test numériques) encodées dans un format apte à être lu par des appareils d'imagerie médicale, mis en oeuvre par ordinateur, caractérisé par le fait qu'il comprend les étapes consistant à :
- définir, dans un espace continu tridimensionnel, une scène tridimensionnelle comportant une forme continue tridimensionnelle et un milieu englobant, ladite forme tridimensionnelle étant constituée à partir de formes primitives de base par rotation, translation, chevauchement ou regroupement d'une ou plusieurs formes primitives de base ;
- discrétiser la scène tridimensionnelle obtenue à l'étape précédente en éléments de volume (voxels) en utilisant un mécanisme de pondération ;
- segmenter la scène tridimensionnelle discrétisée en voxels en créant des coupes bidimensionnelles de la scène tridimensionnelle ; et
- encoder les informations décrivant les coupes bidimensionnelles de la scène tridimensionnelle obtenues dans un format apte à être lu par des appareils d'imagerie médicale.

## Description

La présente invention porte sur le domaine du traitement d'images médicales, et plus particulièrement sur un procédé de générations d'images numériques dans un format apte à être lu par des appareils de traitement d'images médicales, sur des images numériques générées par un tel procédé, ainsi que sur un procédé de contrôle qualité des consoles de traitement d'images médicales se basant sur les images numériques générées.

Des consoles de traitement d'images médicales sont utilisées pour de nombreuses applications, soit à visée diagnostique, soit à visée thérapeutique pour préparer ou réaliser certains traitements notamment dans le domaine de la radiothérapie qui consiste à stériliser les tumeurs cancéreuses au moyen de fortes doses de rayonnements ionisants délivrées le plus souvent avec de multiples faisceaux concentriques de rayons X produits par un accélérateur linéaire d'électrons. Compte tenu du danger potentiel que peuvent présenter les techniques de radiothérapie, les traitements sont préalablement simulés sur une console de traitement d'images appelée système de planification des traitements (TPS).

Ce système de planification des traitements comporte notamment un module, appelé console de simulation virtuelle, permettant d'optimiser la géométrie de l'irradiation en définissant un ensemble de faisceaux d'irradiation concentriques permettant d'irradier de manière homogène tout le volume de la tumeur, tout en protégeant autant que faire se peut les tissus sains autour de la tumeur.

La console de simulation virtuelle travaille sur des images numériques du patient, obtenues à partir d'une exploration du patient au moyen du scanner à rayons X associé à la console de simulation virtuelle. Le scanner fournit un ensemble de coupes tomographiques transversales du patient, qui seront autant d'images numériques à traiter par la console de simulation virtuelle pour constituer un patient virtuel tridimensionnel qui sera utilisé pour déterminer les conditions géométriques d'irradiation optimales définies précédemment.

Cette optimisation géométrique est réalisée sur la console de Simulation Virtuelle (SV) au moyen de différents outils logiciels (contourage, expansions, mise en place du point de concours des faisceaux, choix de l'incidence, conformation des limites de faisceau, mise en place de repères cutanés, production de clichés de référence...) qu'il convient de tester car leurs performances conditionnent directement la qualité de la simulation virtuelle et par conséquent du traitement.

L'invention consiste notamment à réaliser ce type de contrôle qualité au moyen d'objets-test numériques obtenus directement au moyen d'un logiciel dédié qui les encode dans un format lisible par l'ensemble des plates-formes de traitement d'images médicales.

Le procédé actuel pour réaliser ces contrôles de qualité consiste à scanner des fantômes (objets-test) physiques au moyen du scanner associé à la console pour obtenir leurs « équivalents » numériques lisibles par la console de simulation virtuelle. Les objets-test numériques ainsi obtenus sont mis en entrée de la console de simulation virtuelle et sont traités par les différents outils à tester sur la console de simulation virtuelle.

On évalue alors soit visuellement, soit à l'aide d'instruments logiciels de mesure (distance, intensité d'image...) les résultats du traitement de l'objet-physique scanné puis traité par la console au moyen de l'outil logiciel à tester et on compare ces résultats aux résultats attendus.

Ce procédé présente plusieurs inconvénients :
- il faut avant chaque simulation de traitement mobiliser le scanner pour scanner l'objet-test physique, ce qui limite le temps d'utilisation du scanner pour les patients ;
- le contrôle des performances intrinsèques de la console de simulation virtuelle est biaisé par le fait que la console de simulation virtuelle ne travaille pas sur des images parfaites de l'objet-test physique (OTP), mais sur des images obtenues et donc déjà altérées par un scanner. Il en résulte que lorsqu'on compare le résultat du traitement par la console de simulation virtuelle au résultat attendu, on ne contrôle pas uniquement le traitement effectué par la console de simulation virtuelle seule, mais le traitement par le scanner puis par la console de simulation virtuelle. En termes de contrôle qualité d'une chaîne de dispositifs médicaux permettant de réaliser un diagnostic ou un traitement, il est souhaitable que chaque appareil de la chaîne puisse être testé individuellement. Le procédé utilisé actuellement permet uniquement d'effectuer un contrôle qualité sur l'ensemble scanner & console de simulation virtuelle, mais pas sur la console de simulation virtuelle uniquement ;
- le temps qu'il convient de consacrer au contrôle qualité comprenant la séquence d'acquisition par le scanner des images de l'OTP puis le traitement par la console de simulation virtuelle est allongé ;
- enfin, compte tenu de la complexité des usinages des matériaux qu'ils mettent en oeuvre, les OTP sont limités et/ou réglables manuellement, ce qui conduit à des contrôles de qualité incomplets et/ou peu précis.

La présente invention a pour objet un procédé mis en oeuvre par un ordinateur, consistant à générer des objets-test numériques (OTN) dans un format apte à être lu par un appareil d'imagerie médicale, par exemple au format DICOM.

Les avantages d'un tel procédé de génération d'OTN sont nombreux :
- il n'y a plus besoin de scanner un objet-test physique pour obtenir un objet-test numérique, ce qui présente un gain de temps substantiel pour la procédure de test de l'appareil de traitement d'images et permet de libérer le scanner pour des patients ;
- le scanner n'étant plus utilisé, on teste uniquement les performances intrinsèques de l'appareil de traitement d'images, ce qui est plus précis du point de vue du contrôle qualité de la console de traitement d'images, le biais apporté par le scanner dans l'état antérieur de la technique n'étant plus intégré ;
- les OTN générés par le procédé de la présente invention sont créés facilement et rapidement, ce qui diminue leur coût et par conséquent le coût des tests des appareils de traitement d'images ;
- cette réduction des coûts de production permet d'envisager un ensemble beaucoup plus complet d'OTN, et par conséquent de réaliser des tests plus exhaustifs et plus complets, ce qui améliore à terme les performances de l'appareil de traitement d'images médicales ;
- les OTN générés par le procédé de la présente invention sont plus évolutifs que ceux générés par l'état antérieur de la technique et donc mieux à même de suivre les évolutions et réglementations dans le domaine du contrôle de qualité des consoles de traitement d'images médicales ;
- la parfaite maîtrise du processus de fabrication de l'OTN offerte par la présente invention permet de connaître de manière complète et précise les OTN et donc de connaître parfaitement les résultats attendus des traitements de la console de traitement d'images. Au bilan, les tests réalisés avec les OTN produits selon la présente invention sont beaucoup plus précis ;
- étant donné que l'on connaît parfaitement les OTN d'entrée produits selon la présente invention, on peut créer des séquences de tests des appareils de traitement d'images en créant des OTN de sortie attendus, et en comparant les OTN de sortie attendus à ceux produits par le traitement des OTN d'entrée par l'appareil de traitement d'images. Le traitement des résultats des tests de l'appareil de traitement d'images peut alors être entièrement automatisé, ce qui améliore leur précision et réduit la durée des contrôles.

La présente invention a pour objet un procédé de génération d'images numériques (objets-test numériques) encodées dans un format apte à être lu par des appareils d'imagerie médicale, mis en oeuvre par ordinateur, caractérisé par le fait qu'il comprend les étapes consistant à :
- définir, dans un espace continu tridimensionnel, une scène tridimensionnelle comportant une forme continue tridimensionnelle et un milieu englobant, ladite forme tridimensionnelle étant constituée à partir de formes primitives de base par rotation, translation, chevauchement ou regroupement d'une ou plusieurs formes primitives de base ;
- discrétiser la scène tridimensionnelle obtenue à l'étape précédente en éléments de volume (voxels) en utilisant un mécanisme de pondération ;
- segmenter la scène tridimensionnelle discrétisée en voxels en créant des coupes bidimensionnelles de la scène tridimensionnelle ; et
- encoder les informations décrivant les coupes bidimensionnelles segmentant la scène tridimensionnelle dans un format apte à être lu par des appareils d'imagerie médicale.

Une densité (ou intensité de signal) peut être associée à une ou plusieurs formes primitives de la scène tridimensionnelle.

Une ou plusieurs formes primitives de la scène tridimensionnelle peuvent être colorisées, pour clarifier leur visualisation dans la scène tridimensionnelle.

Le mécanisme utilisé dans l'étape de discrétisation peut être un mécanisme de pondération binaire : chaque voxel, en fonction de la position de son centre, appartient soit à la forme tridimensionnelle, soit au milieu environnant.

Le mécanisme de pondération utilisé dans l'étape de discrétisation peut être un mécanisme dans lequel une densité est attribuée au voxel, selon le volume du voxel inclus dans chacune des formes primitives et du milieu englobant contenu dans la forme tridimensionnelle.

Le format apte à être lu par des appareils d'imagerie médicale peut être le format DICOM.

La présente invention a également pour objet des images numériques encodées dans un format apte à être lu par des appareils d'imagerie médicale (Objets-test Numériques ou OTN) obtenues par le procédé tel que défini ci-dessus.

La présente invention a également pour objet un logiciel mettant en oeuvre le procédé tel que décrit ci-dessus.

La présente invention a également pour objet un procédé de contrôle qualité de consoles de traitement d'images médicales, caractérisé par le fait qu'il comprend les étapes consistant à :
- générer des Objets-test Numériques à l'aide du procédé de génération d'images tel que défini ci-dessus ;
- mettre en entrée de la console de traitement d'images médicales les objets-test numériques générés à l'étape précédente pour obtenir des images numériques de sortie en sortie de la console de traitement d'images médicales à tester ;
- comparer les images numériques de sortie obtenues à l'étape précédente avec des images numériques de sortie de référence obtenues ou non à l'aide du procédé de génération d'images tel que défini ci-dessus.

La présente invention a également pour objet un système mettant en oeuvre le procédé tel que défini ci-dessus, caractérisé par le fait qu'il comprend :
- une console de traitement d'images à tester ;
- des OTN d'entrée ;
- des OTN de sortie de référence ;
- des OTN de sortie de résultat issus du traitement des OTN d'entrée par la console de traitement d'images à tester ;
- un ordinateur mettant en oeuvre le logiciel tel que défini ci-dessus et ainsi que des outils de comparaison et de traitement d'images numériques.

Afin de mieux illustrer l'objet de la présente invention, est décrit ci-après un mode de réalisation préféré, conjointement aux Figures annexées, sur lesquelles :
- la Figure 1 représente les deux modules du logiciel permettant de mettre en oeuvre le procédé de génération d'OTN selon l'invention ;
- la Figure 2 est une représentation à titre d'exemple d'une vue en perspective d'une forme continue tridimensionnelle obtenue à partir du premier module du logiciel mettant en oeuvre le procédé de génération d'images numériques selon l'invention ;
- la Figure 3 est une représentation à titre d'exemple des coupes obtenues à partir de la Figure 2 avec le second module du logiciel mettant en oeuvre le procédé de génération d'images numériques selon l'invention ;
- la Figure 4 représente les différentes étapes du procédé de génération d'objets-test numériques ;
- la Figure 5 représente les étapes du procédé de contrôle qualité d'une console de traitement d'images médicales au moyen d'OTN (OTN d'entrée, OTN de sortie résultat, OTN de sortie de référence).

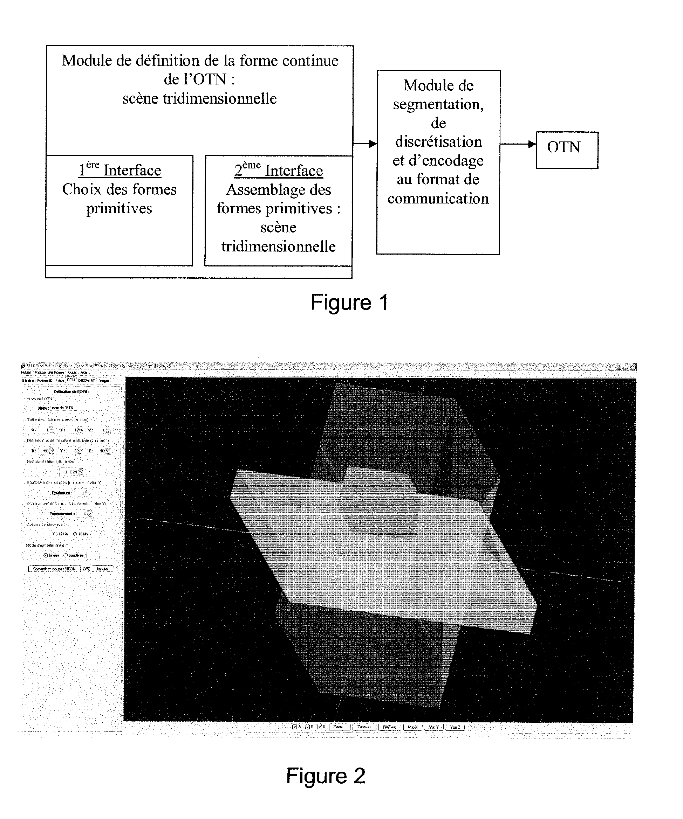

Comme on peut le voir sur la Figure 1, le logiciel réalisant le procédé de génération d'objets-test numériques comporte deux modules principaux.

Le premier module est un module qui permet de définir la forme continue tridimensionnelle de l'objet-test numérique à partir de formes primitives de base. Le deuxième module permet de discrétiser et de segmenter la forme continue obtenue tridimensionnelle en éléments de volume (voxels) en coupes bidimensionnelles. Enfin, ce second module encode les coupes bidimensionnelles en un format apte à être lu par des appareils d'imagerie médicale, par exemple au format DICOM.

Le premier module de définition de la forme continue de l'OTN à partir de formes primitives de base contient deux interfaces distinctes.

La première interface, l'interface « forme » permet de définir individuellement chaque forme primitive de base, et éventuellement d'appliquer des translations et des rotations à ces formes primitives de base.

Les formes primitives de base peuvent être par exemple :
- un point, il s'agit alors d'un voxel dont on spécifie le centre dans le repère de l'interface ;
- une pyramide, il s'agit alors d'une pyramide tronquée ou non de base rectangulaire, définie par les deux diamètres de sa face de sortie, les deux diamètres de sa face d'entrée et sa hauteur ;
- un cône, tronqué ou non, de base elliptique, défini de façon analogue à la pyramide ;
- un ellipsoïde, défini par trois diamètres définis en nombre réel de voxels.

Un point de référence est associé à chaque primitive. Ce point est utilisé comme centre de rotation pour des rotations appliquées dans l'interface « forme ».

Aux caractéristiques géométriques de ces formes primitives de base, il est possible d'ajouter des caractéristiques de densité de la forme primitive de base, pour modéliser la densité de différents tissus humains.

Les formes primitives de base peuvent également être colorisées, afin par exemple de mieux visualiser les différentes formes et densités des tissus modélisés.

Les formes primitives de base peuvent subir dans l'interface « forme » des translations selon les trois directions de l'espace, et des rotations autour de leur point de référence défini par l'utilisateur.

La deuxième interface, l'interface « scène », permet de regrouper, dans un espace continu tridimensionnel, les formes primitives définies dans la première interface au sein d'une scène tridimensionnelle, comportant la forme continue tridimensionnelle formée par regroupement des différentes formes primitives de base et un milieu englobant.

Les formes primitives de base sont regroupées dans la seconde interface en une forme composée, au moyen d'un opérateur booléen choisi par l'utilisateur parmi les trois types suivants : union, intersection et soustraction.

Au cours de cette opération booléenne, l'utilisateur spécifie laquelle des deux densités est affectée à la zone commune aux deux formes. Pour les autres zones, la zone composée conserve la densité de la forme dont elle est issue.

Les formes peuvent subir dans la deuxième interface des translations selon les trois directions de l'espace, et des rotations autour de l'origine du repère de la scène globale.

La deuxième interface permet également de pouvoir éditer une forme, ce qui consiste à repasser dans l'interface « forme », de pouvoir copier une forme, de pouvoir supprimer une forme, et pouvoir lier ou délier des formes primitives et/ou composées pour leur appliquer des transformations (translations ou rotations) communes.

Enfin, l'ordre des formes primitives et composées dans l'interface « scène » peut être modifié par l'utilisateur de manière à définir la densité finale qui sera prise en compte dans les régions de chevauchement de formes : la première forme dans la liste l'emportera sur les formes suivantes.

On obtient en sortie du premier module une forme continue tridimensionnelle, dont un exemple est représenté sur la Figure 2.

Dans l'exemple de la Figure 2, la scène tridimensionnelle obtenue est constituée de trois parallélépipèdes rectangles. Deux des trois parallélépipèdes rectangles ont une direction longitudinale commune, le plus petit de ces deux parallélépipèdes étant contenu dans le plus grand. Ces deux parallélépipèdes forment la scène tridimensionnelle. Un troisième parallélépipède, qui a une direction longitudinale perpendiculaire à la direction longitudinale des deux autres parallélépipèdes, représente le volume qui sera segmenté et le milieu englobant. L'axe des y de segmentation est ici la direction longitudinale des deux premiers parallélépipèdes.

Le logiciel code et stocke l'ensemble des informations qui caractérisent la scène tridimensionnelle contenant des formes primitives et/ou des formes composées sous forme d'arbres dans un fichier XML. La racine de l'arbre est la scène complète, chaque feuille représentant une primitive. Chaque noeud de l'arbre est alors une composition booléenne de formes qui comporte des attributs relatifs aux transformations appliquées à la forme qu'il représente.

Le second module du logiciel est le module de discrétisation de la scène tridimensionnelle continue en voxels, de segmentation en coupes bidimensionnelles pixelisées (pixel : élément d'image) et d'encodage des coupes dans un format apte à être lu par des appareils d'imagerie médicale, par exemple DICOM pour les appareils d'imagerie ou DICOM-RT pour les appareils de radiothérapie.

Au bilan, ce module permet, à partir de l'objet continu tridimensionnel formé à l'aide du premier module du logiciel, d'obtenir des coupes bidimensionnelles discrétisées en éléments d'images (ou pixels) de cette forme continue, et encodées dans un format apte à être lu par des appareils d'imagerie médicale.

Dans ce module, l'utilisateur définit la taille des voxels en mm, les dimensions et la densité du milieu englobant la scène tridimensionnelle, l'épaisseur des coupes et leur espacement en mm et la dynamique du codage des densités.

Un mécanisme de discrétisation pouvant être utilisé est divulgué dans l'article Proceedings of SPIE, Medical Imaging 2006 : Physics of medical imaging, volume 6142. SPIE, 2006 et consiste à discrétiser le volume de façon binaire, chaque voxel appartenant à la forme si son centre appartient à la forme, puis à créer des images des coupes en fonction de leur volume et de leur espacement.

Un autre mécanisme de discrétisation est également disponible sur le logiciel, et permet de définir pour chaque voxel une appartenance pondérée à la forme, en affectant une densité au voxel, selon le volume du voxel appartenant à la forme. Ce volume est approché en segmentant chaque voxel en sous-voxels.

Le deuxième module contient également des fonctions d'altération calibrées des images en coupe, telles que le Bruit, le Flou et l'effet de volume partiel pour modéliser l'influence de ces facteurs sur les OTN.

Une fois la scène globale discrétisée en voxels, milieu englobant compris, à l'aide d'un des mécanismes de discrétisation définis ci-dessus, le logiciel segmente le volume discret selon l'axe des Y pour créer des coupes bidimensionnelles de l'OTN, l'épaisseur et l'espacement des coupes étant donné en voxels.

Une fois la scène tridimensionnelle discrétisée et segmentée, le module permet l'encodage des fichiers correspondant à l'image des coupes dans un format apte à être lu par des appareils d'imagerie médicale, par exemple au format DICOM.

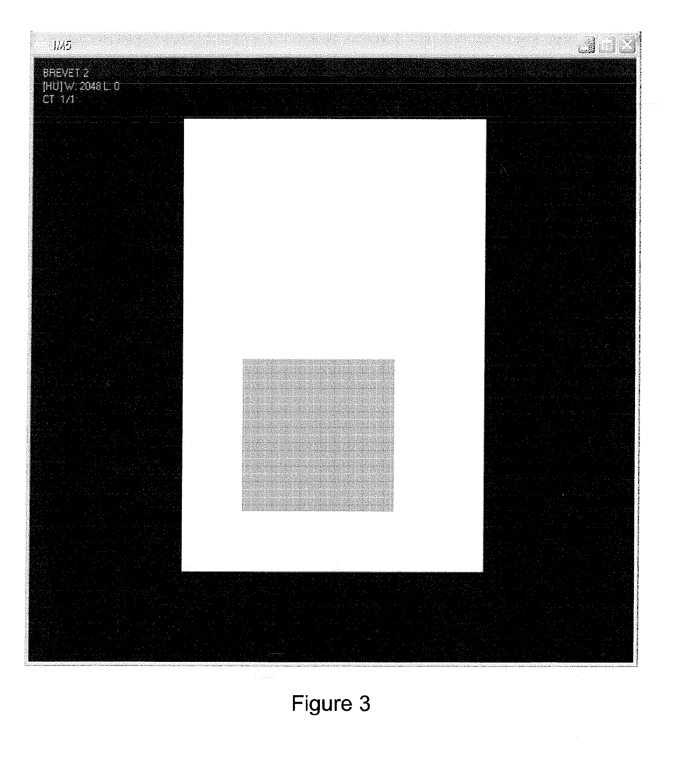

Les coupes selon l'axe des y (direction longitudinale des deux premiers parallélépipèdes de la Figure 2) obtenues en sortie du second module pour la scène tridimensionnelle de la Figure 2 sont représentées en Figure 3.

Le fichier XML décrivant la scène est complété dans le second module pour renseigner l'OTN de toutes les informations indispensables à sa discrétisation en voxels, sa segmentation en coupes bidimensionnelle et à l'encodage de ces coupes dans un format apte à être lu par des appareils d'imagerie médicale.

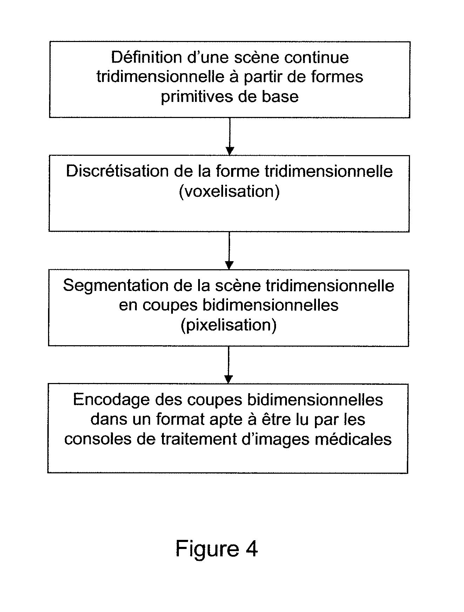

Comme on peut le voir sur la Figure 4, le procédé de génération d'OTN comprend les étapes consistant à :
- définir une forme continue tridimensionnelle composée à partir d'une ou plusieurs formes primitives de base à l'aide du premier module du logiciel décrit ci-dessus ;
- discrétiser, segmenter et encoder au format DICOM la forme continue tridimensionnelle obtenue à l'étape précédente, en vue d'obtenir des coupes bidimensionnelles de cette image au format DICOM.

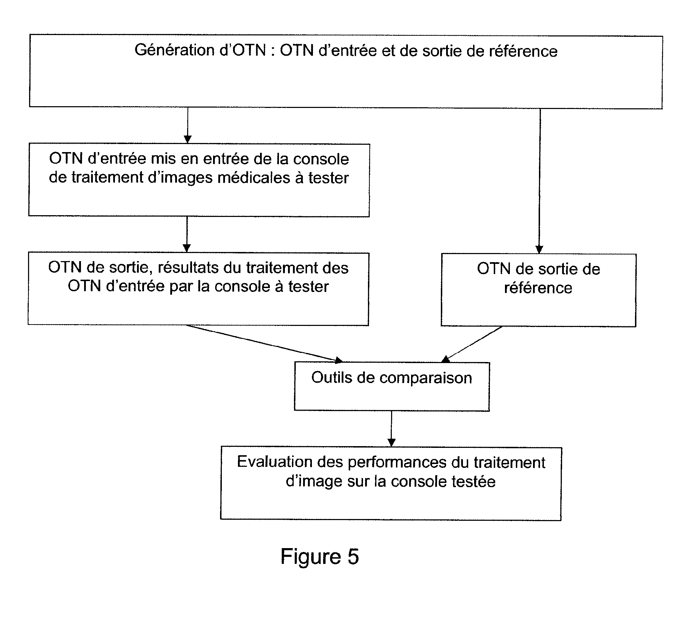

La Figure 5 illustre un procédé de contrôle qualité d'une console de traitement d'images médicales au moyen d'OTN obtenus selon le procédé décrit précédemment.

Ce procédé utilise des OTN calibrés, spécifiques pour le test d'un des outils ou traitement d'images de la console de traitement d'images médicales testée. Parmi ces OTN, certains, les OTN d'entrée, sont mis en entrée de la console de traitement d'images médicales, et traités par cette console.

Les OTN obtenus en sortie de la console, les OTN de sortie « résultat » sont ensuite comparés avec des outils logiciels de comparaison d'images, manuellement ou automatiquement à des OTN de sortie de référence, également générés selon le procédé de génération d'images faisant l'objet de la présente invention et correspondant soit à un traitement parfait de l'OTN d'entrée par une console idéale ne présentant aucun défaut, soit à un traitement entaché d'un défaut parfaitement calibré.

Ce procédé peut être mis en oeuvre dans un système automatique de test/contrôle qualité de la console de traitement d'images.

## Revendications

1. - Procédé de génération d'images numériques encodées dans un format apte à être lu par des appareils d'imagerie médicale, mis en oeuvre par ordinateur, **caractérisé par le fait qu'**il comprend les étapes consistant à :
- définir, dans un espace continu tridimensionnel, une scène tridimensionnelle comportant une forme continue tridimensionnelle et un milieu englobant, ladite forme tridimensionnelle étant constituée à partir de formes primitives de base par rotation, translation, chevauchement ou regroupement d'une ou plusieurs formes primitives de base ;
- discrétiser la scène tridimensionnelle obtenue à l'étape précédente en éléments de volume (voxels) en utilisant un mécanisme de pondération ;
- segmenter la scène tridimensionnelle discrétisée en voxels en créant des coupes bidimensionnelles de la scène tridimensionnelle ; et
- encoder les informations décrivant les coupes bidimensionnelles de la scène tridimensionnelle obtenues dans un format apte à être lu par des appareils d'imagerie médicale.

2. - Procédé de génération d'images numériques dans un format apte à être lu par des appareils d'imagerie médicale selon la revendication 1, **caractérisé par le fait qu'**une densité est associée à une ou plusieurs formes primitives de la scène tridimensionnelle.

3. - Procédé de génération d'images numériques dans un format apte à être lu par des appareils d'imagerie médicale selon la revendication 1 ou la revendication 2, **caractérisé par le fait qu'**une ou plusieurs formes primitives de la scène tridimensionnelle sont colorisées pour clarifier leur visualisation dans la scène tridimensionnelle.

4. - Procédé de génération d'images numériques dans un format apte à être lu par des appareils d'imagerie médicale selon l'une quelconque des revendications précédentes, **caractérisé par le fait que** le mécanisme de pondération utilisé dans l'étape de discrétisation est un mécanisme binaire, chaque voxel, en fonction de la position de son centre, appartenant soit à la forme tridimensionnelle, soit au milieu environnant.

5. - Procédé de génération d'images numériques dans un format apte à être lu par des appareils d'imagerie médicale selon l'une quelconque des revendications 1 à 4, **caractérisé par le fait que** le mécanisme de pondération utilisé dans l'étape de discrétisation est un mécanisme dans lequel une densité est attribuée au voxel, selon le volume du voxel inclus dans chacune des formes primitives et du milieu englobant contenu dans la forme tridimensionnelle.

6. - Procédé de génération d'images numériques dans un format apte à être lu par des appareils d'imagerie médicale selon l'une quelconque des revendications 1 à 5, **caractérisé par le fait que** le format apte à être lu par des appareils d'imagerie médicale est le format DICOM.

7. - Produit de programme d'ordinateur, **caractérisé par le fait qu'**il comporte des instructions qui sont adaptées à l'éxécution des étapes du procédé tel que défini à l'une quelconque des revendications 1 à 6.

8. - Procédé de contrôle qualité de consoles de traitement d'images médicales, **caractérisé par le fait qu'**il comprend les étapes consistant à :
- générer des Objets-test Numériques à l'aide du procédé de génération d'images tel que défini à l'une quelconque des revendications 1 à 6 ;
- mettre en entrée de la console de traitement d'images médicales les objets-test numériques générés à l'étape précédente pour obtenir des images numériques de sortie en sortie de la console de traitement d'images médicales à tester ;
- comparer les images numériques de sortie obtenues à l'étape précédente avec des images numériques de sortie de référence obtenues ou non à l'aide du procédé de génération d'images tel que défini à l'une quelconque des revendications 1 à 6.

9. - Système mettant en oeuvre le procédé tel que défini à la revendication 8, **caractérisé par le fait qu'**il comprend :
- une console de traitement d'images à tester ;
- des OTN d'entrée ;
- des OTN de sortie de référence ;
- des OTN de sortie de résultat issus du traitement des OTN d'entrée par la console de traitement d'images à tester ;
- un ordinateur mettant en oeuvre le produit de programme d'ordinateur tel que défini à la revendication 7, ainsi que des outils de comparaison et de traitement d'images numériques.
